# EUROPEAN PATENT APPLICATION

(11) **EP 3 054 588 A1**
(43) Date of publication of application: **10.08.2016**
(21) Application number: 16250002.9
(22) Date of filing: 29.01.2016
(51) Int. Cl.: H02S 30/10, H02S 20/25, F24J 2/52, F24J 2/04

(54) **A FRAME FOR ENCLOSING A PHOTOVOLTAIC LAMINATE**

(30) Priority: 04.02.2015 GB 201501880; 16.10.2015 GB 201518316
(71) Applicant: Solar Century Holdings Limited, London EC1V 0DF (GB)
(72) Inventor: Italiano, Peter, London W4 4NY (GB); Eltringham, Steven, Redditch B98 7NE (GB); Brand, Ryan, London NW5 2TE (GB); Eastwell, Hannah Rose, Kent TN9 1FQ (GB); Sturgeon, Jonathan Charles, London SW16 6BG (GB)
(74) Representative: Atkinson, Ralph

(57) **Abstract**

A frame (201) for enclosing a photovoltaic laminate (202) is shown. Each of the edge parts (203-206) of the frame have a recess to retain the photovoltaic laminate (202). The first side edge part (203) has an outwardly-protruding gutter and an outwardly protruding seal element. The second side edge part (204) has an outwardly-protruding seal element arranged to interlock with a matching frame under its seal element and over its gutter. The front edge part (205) has a forwardly-protruding flange, and the rear edge part (206) has a downward-angled, rearwardly-protruding flange to extend under the flange of the front edge part of a matching frame. Each edge part (203-206) has bevelled end sections to form mitre joints. The gutter of the first side edge part (203) extends rearward of its rear bevel and under the rear edge part (206).

## Description

### Technical Field

The present invention relates to a frame for enclosing a photovoltaic laminate, a photovoltaic module comprising a photovoltaic laminate enclosed by a frame, and a roof of a building including a plurality of photovoltaic modules.

### Background Art

It is known to integrate solar panel systems into a roof of a building using a support structure to which photovoltaic modules are attached. Such support systems are available from the present applicant. In the course of construction, the support structure is connected to the battens of the roof and the photovoltaic modules secured in place.

This process is, however, relatively intensive in terms of labour due to the installation of a support structure and then the photovoltaic modules, and also complex due to the necessary features of the support structure to interface with the roof and provide a secure platform for the photovoltaic modules themselves.

An approach to solving this problem is to integrate into the photovoltaic module the means for first attaching the photovoltaic module to the roof and second interlocking many photovoltaic modules together. However, current designs require the photovoltaic laminate used in the photovoltaic module to be taken out of existing types of automated production processes, which typically use pneumatic rams or lead screws to press a frame onto the sides of the laminate. This adds to complexity in production.

A prior art frame for enclosing a photovoltaic laminate is disclosed in FR 2 965 830 A1. This frame includes features on its vertical edges so that the connection between adjacent frames in an installation is sealed and a gutter is formed.

### Brief Summary of the Invention

According to an aspect of the present invention, there is provided a frame of the aforesaid type, as set out in claim 1.

In an embodiment, the frame forms part of a photovoltaic module, as set out in claim 9.

In another embodiment, the aforesaid photovoltaic module forms part of a roof of a building, as set out in claim 10.

### Brief Description of the Drawings

The invention will now be described by way of example only with reference to the accompanying drawings, which are purely schematic and not to scale, of which:
Figure 1 shows a residential building **101** where the present invention may be deployed;
Figure 2 shows a photovoltaic module **107**;
Figure 3 shows a frame **201** of the photovoltaic module **107**;
Figure 4 is a plan view of the rear and front ends of the left edge part **203** of the frame **201**;
Figure 5 is a cross-sectional view of the left edge part **203**;
Figures 6A and 6B are 3-dimensional views of the rear and front ends respectively of the left edge part **203**;
Figure 7 is a plan view of the rear and front ends of the right edge part **204** of the frame **201**;
Figure 8 is a cross-sectional view of the right edge part **204**;
Figure 9 is a 3-dimensional view of the front end of the left edge part **203**;
Figure 10 is a plan view of the left and right ends of the front edge part **205** of the frame **201**;
Figure 11 is a cross-sectional view of the front edge part **205**;
Figure 12 is a 3-dimensional view of the left end of the front edge part **205**;
Figure 13 is a plan view of the left and right ends of the rear edge part **206** of the frame **201**;
Figure 14 is a cross-sectional view of the rear edge part **206**;
Figure 15 is a 3-dimensional view of the left end of the rear edge part **206**;
Figure 16 shows the flow of water between the left and right edge parts of adjacent photovoltaic modules;
Figure 17 shows the flow of water down the gutters of adjacent photovoltaic modules;
Figure 18 shows a soak tray **1704**;
Figure 19 shows components for securing a pair of photovoltaic modules **107** and **109** to a roof, including a rail element **1901**, right flashing element **1903** and left flashing element **1904**;
Figure 20A shows the right flashing element **1903**;
Figure 20B shows the left flashing element **1904**;
Figure 21 shows a perimeter corner cover **2101**;
Figure 22A shows a front view of the perimeter corner cover **2101**;
Figure 22B shows a side view of the perimeter corner cover **2101**;
Figure 23 shows a rear flashing element **2301**;
Figure 24 shows a view of the rear flashing element **2301**;
Figure 25 shows components for finishing the rear edge of an array of photovoltaic modules according to the present invention;
Figure 26 shows a two-by-two array of photovoltaic modules according to the present invention finished using a kit of flashing elements and covers;
Figure 27 shows the arrangement of the right flashing element and the right corner flashing elements;
Figure 28 shows the arrangement of the left flashing elements and the left corner flashing elements.

### Detailed Description of the Invention

### Figure 1

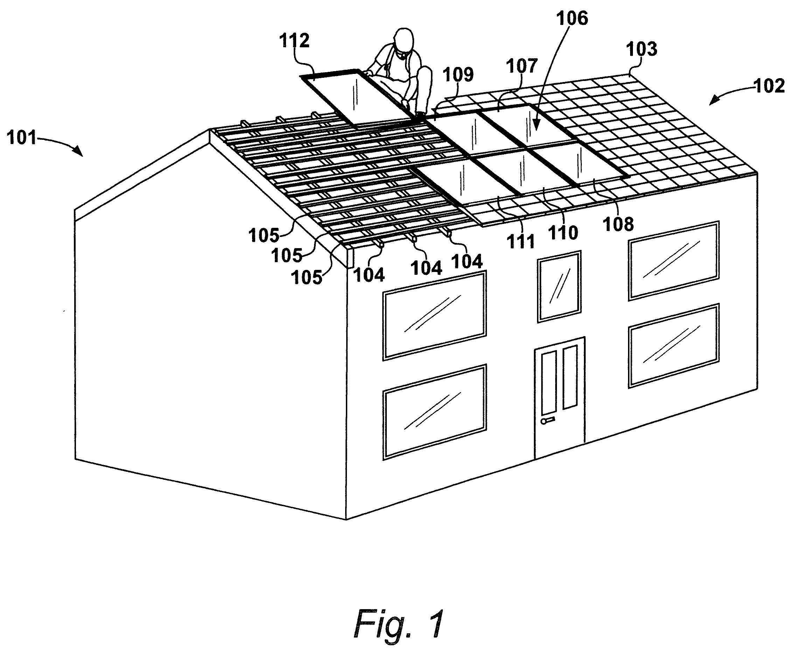

A residential building **101** is illustrated in Figure 1, having a roof **102**. In the present example, the building **101** is a house having a tiled roof, and so it comprises a plurality of tiles arranged and mounted using conventional techniques. It should be noted that, although the roofing elements, such as element **103**, are tiles in the present example, in alternative roofs embodying the present invention, the roof is formed of other types of roofing elements such as fibre cement slates, artificial or reconstituted slates, plain natural slates, interlocking tiles, etc.

As illustrated in the Figure, the roof **102** is in the process of being re-tiled, and thus its rafters **104** and battens **105** mounted thereon are exposed. An engineer is in the process of installing an array **106** of interlocking photovoltaic modules according to the present invention onto the roof to enable power generation for the building **101** using solar energy. Each one of the photovoltaic modules **107**, **108**, **109**, **110**, **111** and **112** in the array is identical, and so each module matches the other ones; the description herein of photovoltaic module **107** is thus applicable for all in the array.

As shown in the figure, the roofing elements **103**, in this case tiles, are being fitted so as to surround the photovoltaic modules **107** to **112**. It is envisaged, however, that the photovoltaic modules of the present invention could be installed as the only roof covering for a building, with no tiles needed. However, this is a less common configuration and so the present embodiment of the present invention provides means for ensuring that an effective interface between the roofing elements **103** and the photovoltaic modules **107** to **112** can be made.

The present invention provides a frame for enclosing a photovoltaic laminate, which when combined for the photovoltaic modules **107** to **112**. As shown in Figure 1, the present invention does not require the presence of any support structure for the photovoltaic modules as the configuration of the frame integrates the required water management, interlocking features and fixing points into the photovoltaic module.

### Figure 2

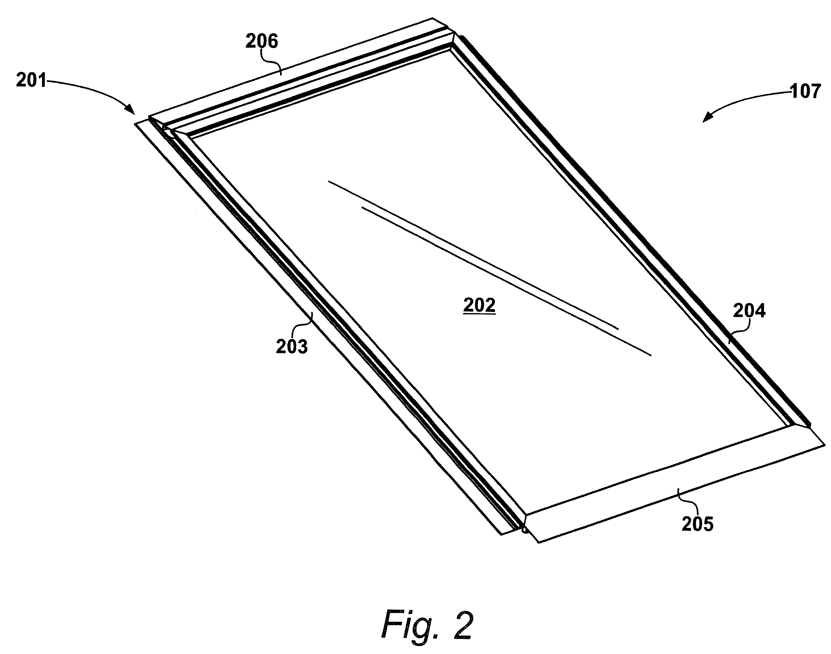

The photovoltaic module **107** is shown in isolation in Figure 2. The module has a frame **201** which encloses a photovoltaic laminate **202**. The photovoltaic laminate **202** is retained securely within the frame **201** so that it is supported when installed on a roof.

The frame **201** includes four edge parts: a first side edge part **203**, a second side edge part **204**, a front edge part **205** and a rear edge part **206**. In a specific embodiment, the frame's edge parts are extruded aluminium, but alternative embodiments are contemplated in which the edge parts are plastic mouldings, for example.

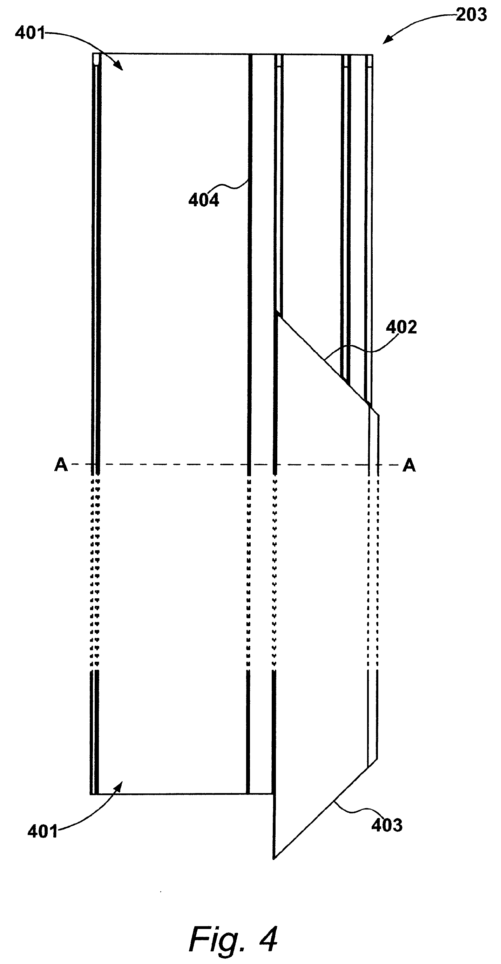

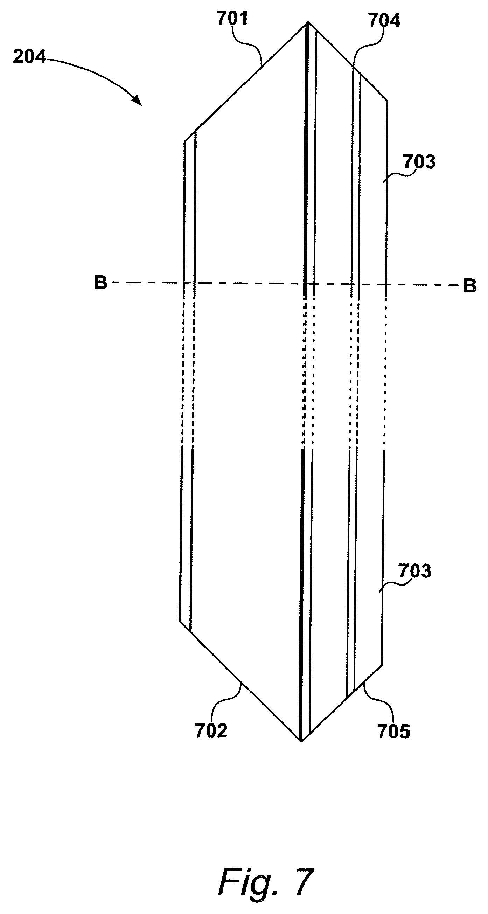

In the present embodiment, the first side edge part **203** is on the left of the frame **201**, whilst the second side edge part **204** is on the right of the frame **201**: As will become apparent, the sides of the frame that the first and second side edge parts take do not matter and the frame **201** may therefore be constructed as a mirror image of that shown in the Figures. Thus, from hereon in, this description will now refer to the first side edge part **203** as the left edge part **203**, which will be described in detail with reference to Figures 4, 5 and 6, whilst the second side edge part **204** will now be referred to as the right edge part **204**, which will be described in detail with reference to Figures 7, 8 and 9.

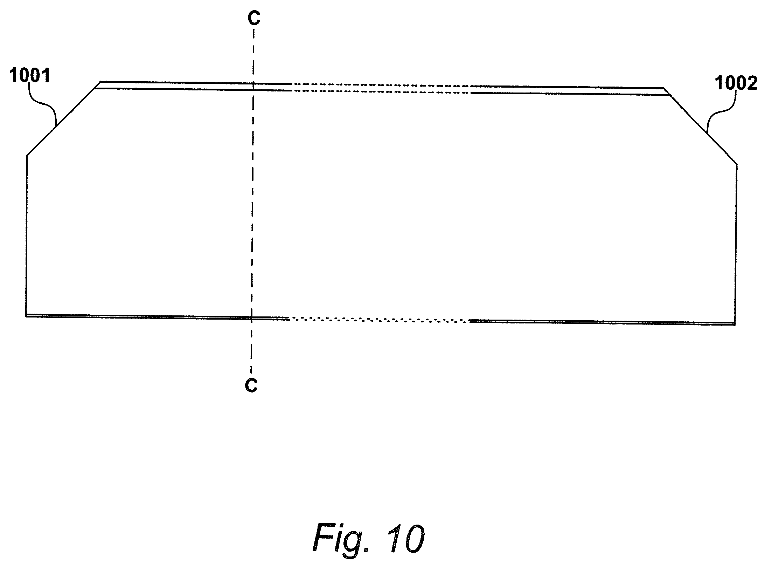

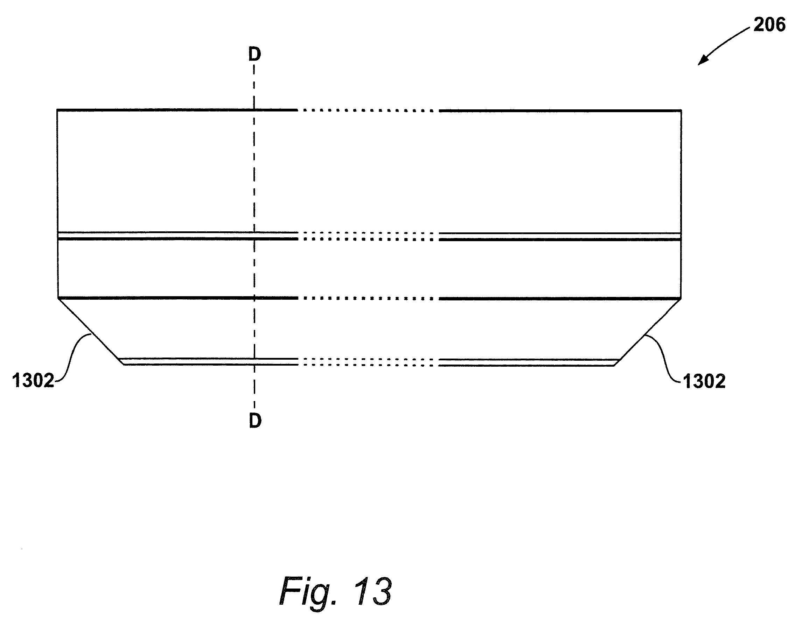

The front edge part **205** is arranged to be closer to the eaves of a roof, whilst the rear edge part **206** is arranged to be closer to the ridge of a roof to enable effective water management. Front edge part **205** will be described in detail with reference to Figures 10, 11 and 12, whilst rear edge part **206** will be described in detail with reference to Figures 13, 14 and 15.

### Figure 3

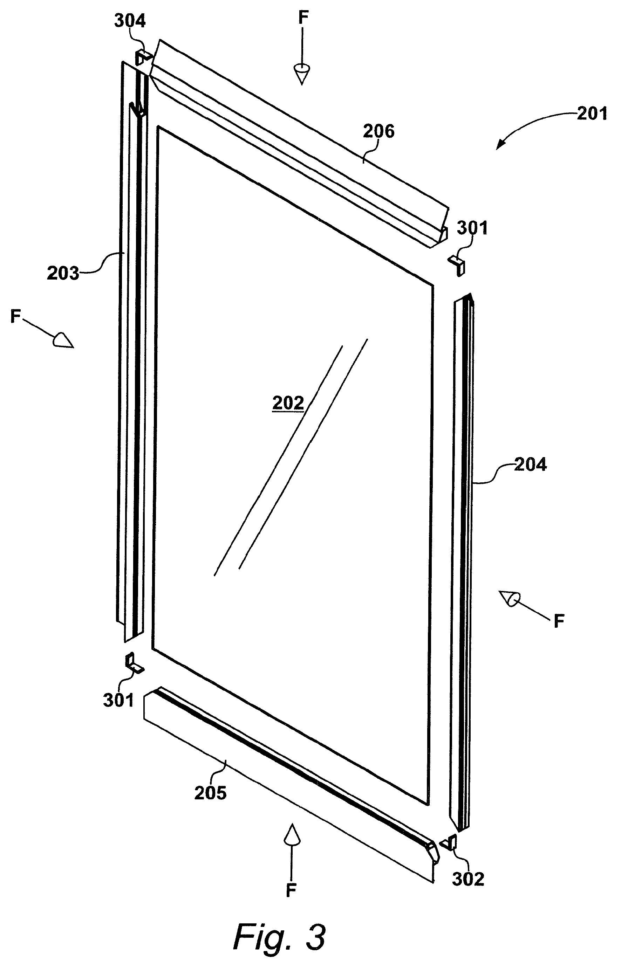

The frame **201** is shown in an exploded isometric view in Figure 3, with the photovoltaic laminate **202** shown at the centre.

In a specific embodiment, the four edge parts **203** to **206** of the frame **201** include bevelled ends so as to enable mitre joints to be created between them. The joints are, in this embodiment, strengthened by means of four L-shape inserts **301**, **302**, **303**, **304** which are received in apertures in the bevelled ends of each edge part **203** to **206**.

As will be described further with reference to the later Figures, each edge part **203** to **206** includes a recess in its inner face for retaining the photovoltaic laminate **202**. This is similar to plain frames for photovoltaic laminates - indeed this is very much by design. Using such recesses enables standard automated production process to be used, in which the recess is filled with mastic or similar adhesive, and the edge parts **203** to **206** are pressed on to the sides of the laminate with force being applied in the direction of the plane of the photovoltaic laminate **202**, as indicated by the arrows F in the Figure. This is achieved in practice by using pneumatic rams or lead screws. Thus the frame **201** of the present invention can be enclosed around the photovoltaic laminate **202** without the assembly process having to be carried out manually, which has hitherto been a barrier to production of frames with integral interlocking and water management systems.

Each one of the edge parts **203** to **206** will now be described in turn, after which the installation of a complete photovoltaic module **107** including the frame **201** and photovoltaic laminate **202** as part of a roof will be described.

### Figure 4

A plan view of the rear (top of the Figure) and front (bottom of the Figure) ends of the left edge part **203** is shown in Figure 4. The left edge part **203** has a gutter **401** which is responsible for catching and managing water that seeps between the photovoltaic modules in the array **106**.

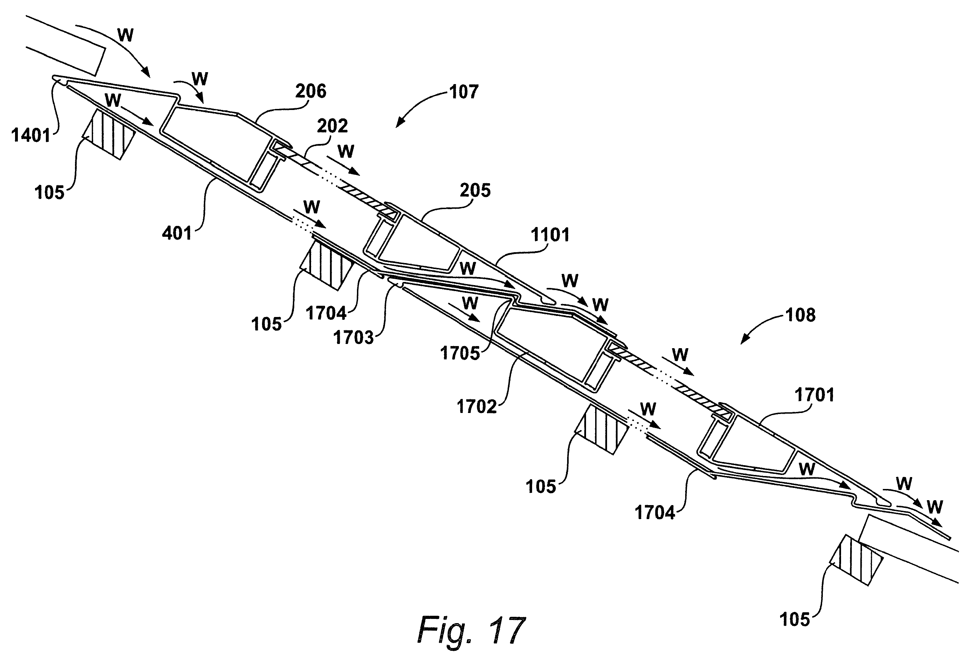

In the present embodiment, the gutter **401** extends beyond the rear bevel **402** of the left edge part **203**, and stops short of the front bevel **403**. This configuration of the gutter **401** enables water in the gutter **401** to be brought to the upper surface of the photovoltaic module, which process will be described with reference to Figure 17.

The gutter **401** includes a scribed channel **404** which enables location of a self-tapping screw to attach the frame **201** to the battens **105** of the roof **102**.

### Figure 5

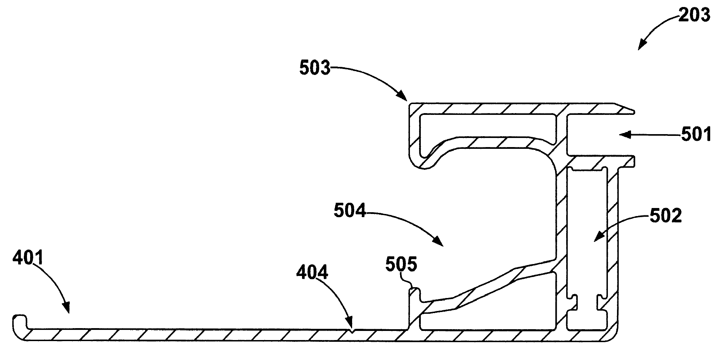

A cross-sectional view is shown in Figure 5 of the left edge part **203** along the line A-A, identified in Figure 4.

As described previously the left edge part **203** includes on an inner face a recess **501** for retaining the photovoltaic laminate **202**. In the specific embodiment illustrated in Figure 5, the recess **501** is a C-section channel in which mastic or a similar adhesive can be injected during assembly to secure the photovoltaic laminate **202** therein. An aperture **502** is provided in the left edge part **203** for receiving the L-shaped inserts **303** and **304** which provide additional strength to the mitre joints between the left edge part **203**, and the front edge part **205** and the rear edge part **206** respectively.

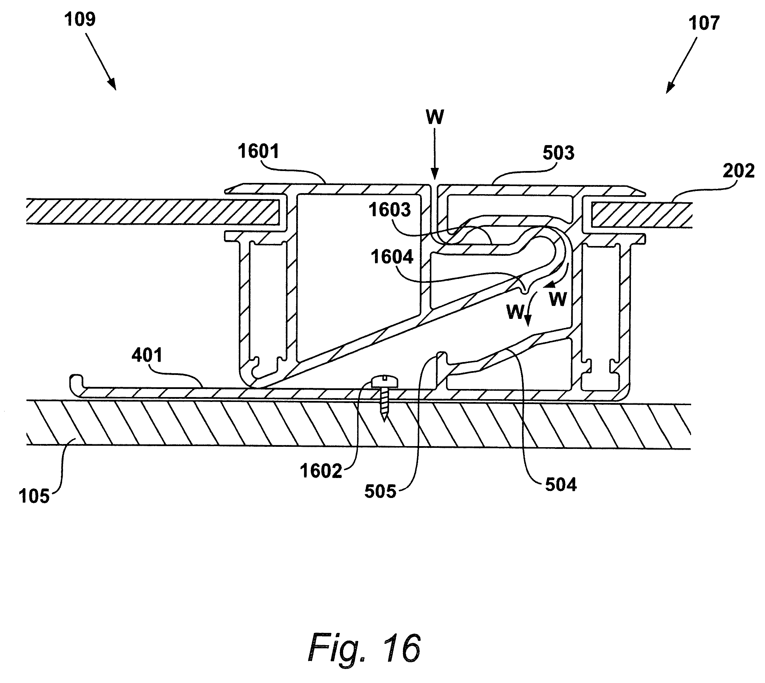

The left edge part further comprises a left seal element **503** which protrudes outwardly above the gutter **401** previously identified in Figure 4. As shown clearly in this cross section, the gutter **401** is provided with a raised channel **504**, which is downwardly-angled towards an up-stand **505**. The function of this channel and up-stand in relation to water management will be described further with reference to Figure 16.

### Figures 6A & 6B

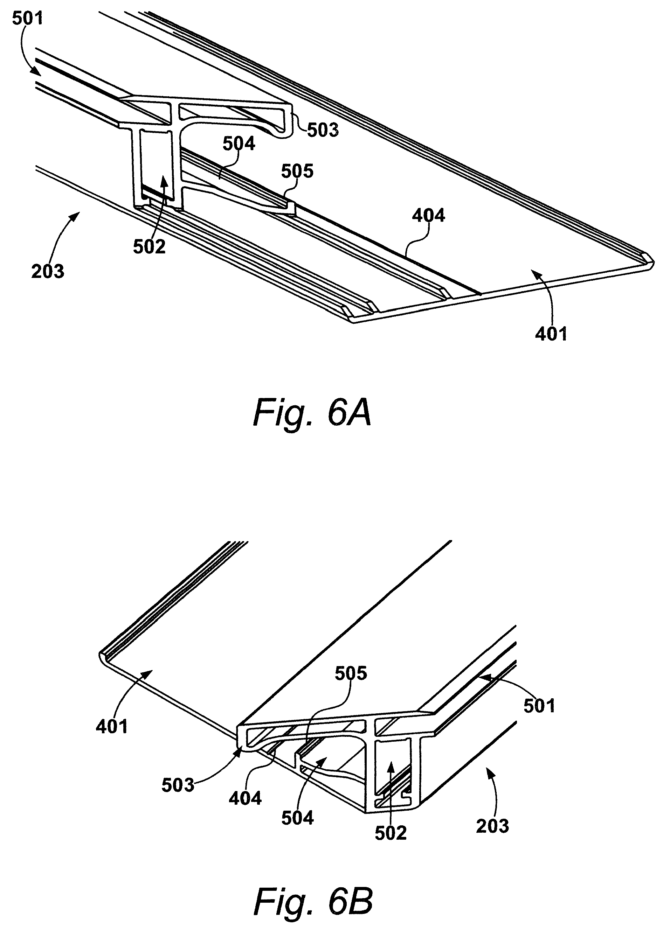

The rear and front ends of left edge part **203** are shown in a 3-dimensional view in Figure 6A and Figure 6B respectively.

Like numerals illustrate the features previously referred to with reference to Figures 4 and 5. In particular, as can be seen in Figures 6A and 6B, the gutter **401** includes along its length a plurality of elongate upstanding ribs. Edge rib **601** extends the full length of the gutter, and prevents any water in the gutter **401** from escaping. Additional ribs, such as rib **602**, rib **603** and rib **604** are provided at the rear section of the gutter **401**, illustrated in Figure 6A. Again, ribs **602**, **603** and **604** keep any water entering to the rear of the rear bevel **402** of the left edge part **203** within the gutter **401**.

### Figure 7

A plan view of the rear (top of the Figure) and front (bottom of the Figure) ends of the right edge part **204** is shown in Figure 7. It should be noted that the right edge part **204** is symmetrical, and so the rear and front ends are identical in configuration.

The right edge part **204** has, in a similar way to the left edge part **203**, a rear bevel **701** and a front bevel **702** for forming mitre joints with the rear edge part **206** and the front edge part **205** respectively. A right seal element **703** protrudes outwards, and extends the length of the right edge part **204** is also provided, which is configured to interlock with the left seal element **503** of the left edge part **203**. The right seal element **703** also includes a rear bevel **704** and a front bevel **705** to fit match the rear bevel **402** and the front bevel **403** of the left edge part **203**.

### Figure 8

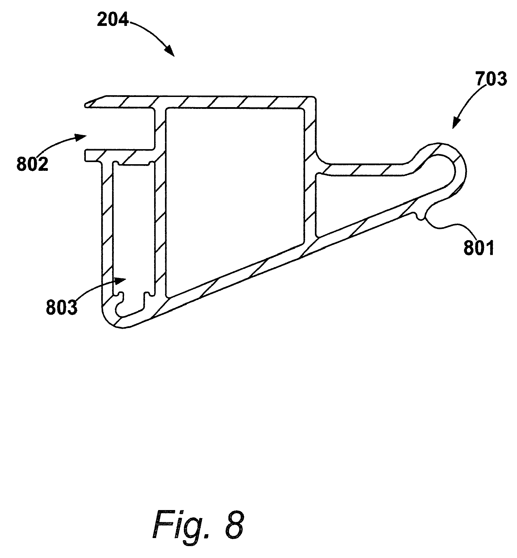

A cross-sectional view is shown in Figure 8 of the right edge part **204** along the line B-B, identified in Figure 7.

As can be seen in the Figure, the right seal element **703** is a complement of the left seal element **503**, in that it is a mirror-image. In this way, the right seal element **703** interlocks with and is positioned between the left seal element **503** and the gutter **401** of the left edge part **203**.

The right seal element **703** includes a rib **801** on its lower face to encourage water flowing around to collect due to surface tension, and drip below. This process is shown and will be described in greater detail with reference to Figure 17.

As with the left edge part **203**, the right edge part **204** includes a recess **802**, which in this specific embodiment is a C-section channel in which mastic or a similar adhesive can be injected during assembly to secure the photovoltaic laminate **202** therein. Furthermore, an aperture **803** is provided in which the L-shaped inserts **301** and **301** may be received.

### Figure 9

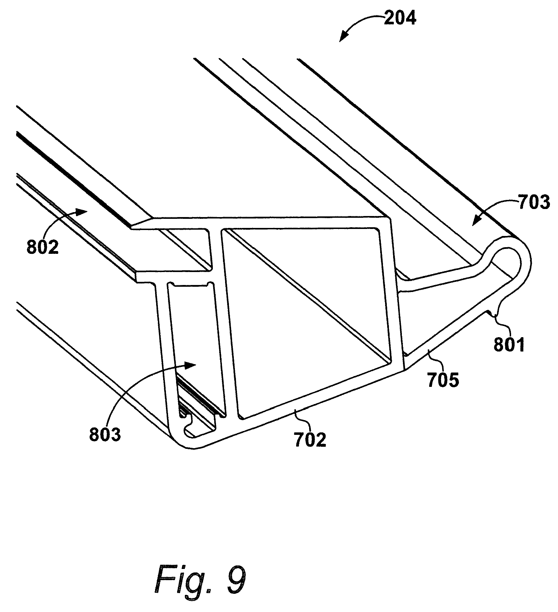

The front end of right edge part **204** is shown in a 3-dimensional view in Figure 9. The rear end as previously noted is a mirror-image due to the symmetrical design of the right edge part **204**. Like numerals illustrate the features previously referred to with reference to Figures 7 and 8.

### Figure 10

A plan view of the left (left of the Figure) and right (right of the Figure) ends of the front edge part **205** is shown in Figure 10. It should be noted that the front edge part **205** is symmetrical, and so the left and right ends are identical in configuration.

As shown in the Figure, the front edge part **205** includes a left bevel **1001** and a right bevel **1002** on its left and right ends respectively. The left bevel **1001** is arranged to form a mitre joint with bevel **403** on the left edge part **203**, whilst the right bevel **1002** is arranged to form a mitre joint with bevel **702** on the right edge part **204**.

### Figure 11

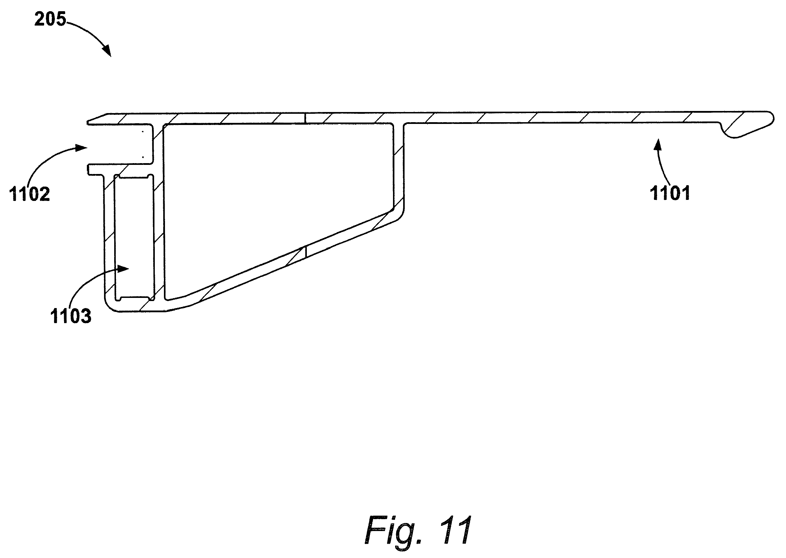

A cross-sectional view is shown in Figure 11 of the front edge part **205** along the line C-C, identified in Figure 10.

The front edge part **205** includes a front flange **1101** which protrudes forward. In practice, the front flange **1101** covers either the rear edge part **206** of the next photovoltaic module in the direction from the ridge to the eaves, or the first roofing element should the module be bounded by tiles, for example. This ensures that water received on the photovoltaic module **107** continues flow down the roof.

As with the left and right edge parts **203** and **204**, the front edge part **205** includes a recess **1102** on its inner face for retaining the photovoltaic laminate **202**, which in this embodiment is a C-section recess. In addition, an aperture **1103** is provided in the front edge part **205** to receive the L-shaped inserts **302** and **303** for strengthening the mitre joints with the right edge part **204** and the left edge part **203** respectively.

### Figure 12

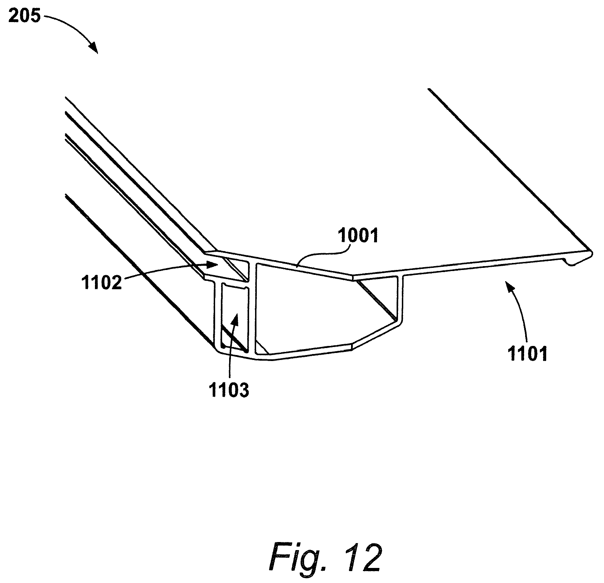

The left end of front edge part **205** is shown in a 3-dimensional view in Figure 12. The left end as previously noted is a mirror-image of the right end due to the symmetrical design of the front edge part **205**. Like numerals illustrate the features previously referred to with reference to Figures 10 and 11.

### Figure 13

A plan view of the left (left of the Figure) and right (right of the Figure) ends of the rear edge part **206** is shown in Figure 13. It should be noted that the rear edge part **206** is symmetrical, and so the left and right ends are identical in configuration.

As shown in the Figure, the rear edge part **206** includes a left bevel **1301** and a right bevel **1302** on its left and right ends respectively. The left bevel **1301** is arranged to form a mitre joint with bevel **402** on the left edge part **203**, whilst the right bevel **1302** is arranged to form a mitre joint with bevel **701** on the right edge part **204**.

### Figure 14

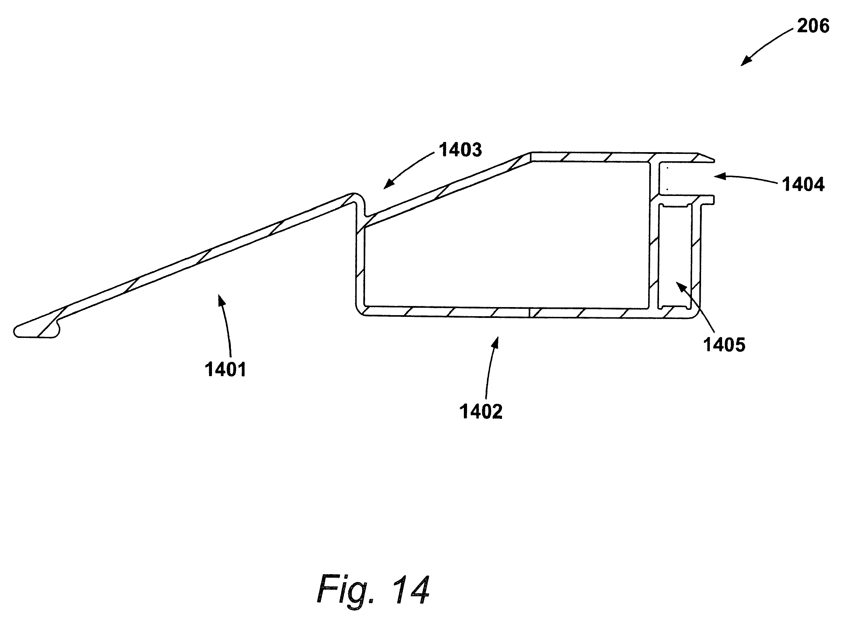

A cross-sectional view is shown in Figure 14 of the rear edge part **206** along the line D-D, identified in Figure 13.

The rear edge part **206** includes a rear flange **1401** which protrudes rearward. As described previously, the front flange **1101** of the front edge part **205** of one photovoltaic module covers at least a portion of the rear edge part **206** of the next photovoltaic module in the direction from the ridge to the eaves.

Thus, the rear flange **1401** of the frame **201** is arranged to extend under the front flange **1101** of the previous photovoltaic module on the roof. To achieve optimal fitting, in this specific embodiment the rear flange **1401** is angled downward with respect to the plane in which the photovoltaic laminate **202** is retained by the frame **201**. In addition, the rear flange **1401** extends below the level of the main body portion **1402** of the rear edge part **206**. As is shown in, and as will be described further with reference to Figure 16, this means that the rear flange **1401** extends downward to meet the gutter **401** of the left edge part **203**.

In addition, in the specific illustrated embodiment, a ridge **1403** is provided between the main body portion **1402** and the rear flange **1401** to prevent backwash of water in the direction from the eaves to the ridge of the roof, for instance during high winds.

As is common between all of the edge parts **203** to **206**, a recess **1404** is provided on the inner face of the rear edge part **206** to retain the photovoltaic laminate **202**, which again in this specific embodiment a C-section recess. In addition, an aperture **1405** is provided in the main body portion **1402** to receive the L-shaped inserts **301** and **304** for strengthening the mitre joints with the right edge part **204** and the left edge part **203** respectively.

### Figure 15

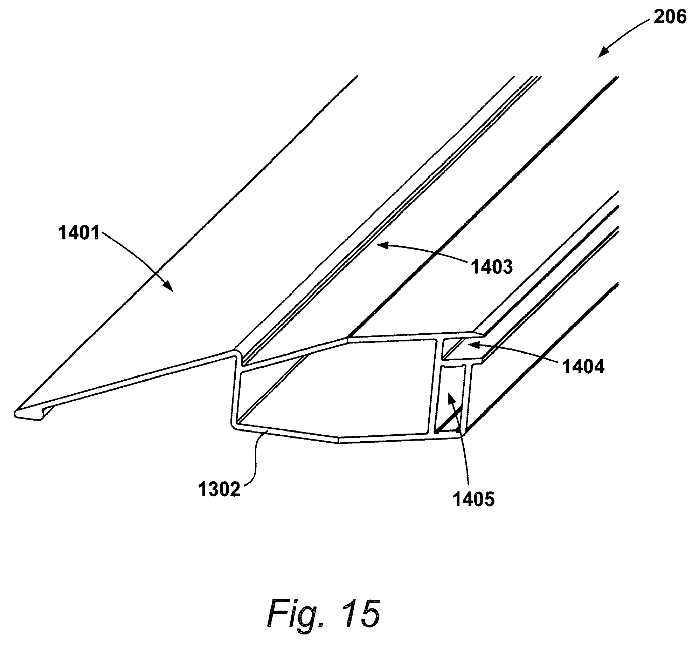

The left end of rear edge part **206** is shown in a 3-dimensional view in Figure 15. The left end as previously noted is a mirror-image of the right end due to the symmetrical design of the rear edge part **206**. Like numerals illustrate the features previously referred to with reference to Figures 13 and 14.

It will be noted that each one of the edge parts **203** to **206** includes an outward facing flat edge. This enables the use of these edge parts in existing automated production processes, which as noted above, involve the application of pressure from the side to enclose photovoltaic laminates.

### Figure 16

As described previously, the frame **201** includes measures to ensure the effective management of the inevitable ingress of water between adjacent photovoltaic modules when installed as part of a roof exposed to the elements. Figure 16 shows the interface between the left edge part **203** of photovoltaic module **107**, and the right edge part **1601** of photovoltaic module **109**. The cross sectional view shown in the Figure is the view from the eaves to the ridge of the roof.

The left edge part **203** is secured to a batten **105** of the roof **102** by way of a self-tapping screw **1602** inserted through the gutter **401** at the location of the scribed channel **404**.

As shown in the Figure, the left seal element **503** of the left edge part **203** interlocks with and abuts the right edge part **1601** over its right seal element **1603**. The right seal element **1603** interlocks with and abuts the left edge part **203** between the left seal element **503** and the gutter **401**.

Thus, in practice, ingress of water between the two frames will occur as indicated by the arrows W. After entering between the left seal element **503** and the right seal element **1603**, water will flow around onto the underside of the right seal element **1603**. It will then collect at the rib **1604** on the underside of **1603** due to surface tension, until it drops onto the raised channel **504** of the gutter **401**. The water will then flow down the raised channel **504**, being kept therein by the up-stand **505**. This prevents excessive exposure of the self-tapping screw **1602** to water. Water may overspill the up-stand **505** during torrential rain, for example, but this will not be the norm and water will tend to be retained in the raised channel **505** as it flows in the direction from the ridge to the eaves.

### Figure 17

In order to remove water from the raised channel **505** of the left edge part **203**, the next photovoltaic laminate down the roof includes the rear flange as described previously. Figure 17 illustrates the flow of water down the roof **102**, and in particular the cooperation between the matching photovoltaic module **108** and photovoltaic module **107** to bring water from the gutter **104** to the outside of the roof.

As illustrated in the Figure, the flow of water, shown by the arrows W, is generally down the roof. In particular, water from roofing elements at the ridge side of the array **106** flows initially onto the rear edge part **206** of the photovoltaic module **107**. It then continues down over the photovoltaic laminate **202**, to the front edge part **205**. Flow continues over the photovoltaic module **108** in a similar way, until it flows from its front edge part **1701** onto the roofing element at the eaves side of the array.

As can be seen in this cross section, a portion of the rear edge part **1702** of the photovoltaic module **108** is covered by the front flange **1101** of the photovoltaic module **107**. In particular, the front flange **1101** covers the rear flange **1703** of the photovoltaic module **107**.

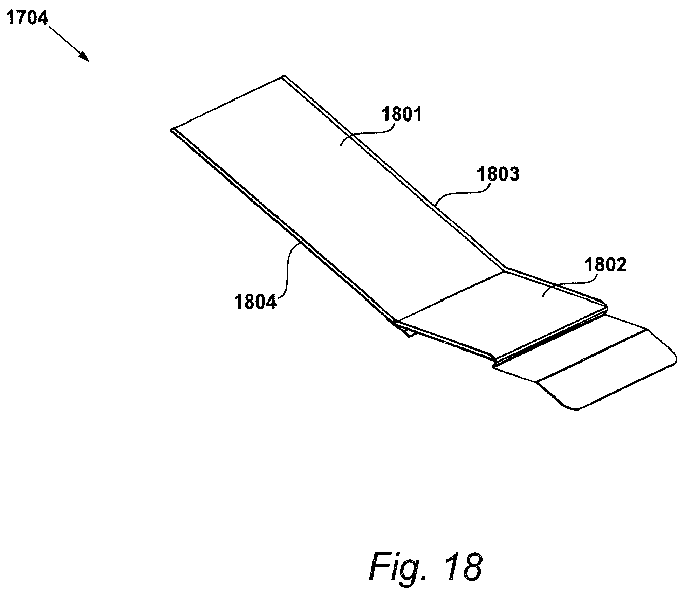

Thus water flowing down the gutter **401** meets the rear flange **1703**, which as can be seen in the Figure, extends between the gutters of the two photovoltaic modules. In this specific illustrated embodiment, a soak tray **1704** is provided to enhance the waterproofing of the roof. Soak tray **1704** may be omitted, as the gutter **104** meets the rear flange **1703** - although the soak tray ensures that water remains within a defined channel and is therefore provided for certainty in terms of direction and management of water flow. Soak tray **1704** is shown in greater detail in Figure 18. It is configured to be fixed under the gutter **401** and over the rear flange **1703**, extending thereover and out beyond the front flange **1101**. Thus, water flows from the gutter **401** over the soak tray and out onto the exterior of the photovoltaic laminate **108**.

In this way, water collected in the gutter of a photovoltaic module is always brought to the exterior of the array to flow over the next module down the roof, or onto the roofing elements if it is the last module in the array. This ensures that even with high levels of ingress of water between the seal elements of the left and right edge parts of interlocked frames, water will not collect at the last module down the array where limits of flow out of the gutter could lead to overflow. In addition, the provision of the ridge in the rear edge part of the photovoltaic module, for example ridge **1705** in rear edge part **1702** prevents water from flowing backward toward the gutter.

### Figure 18

The soak tray **1704** referred to previously is shown in Figure 18.

The soak tray is dimensioned such that a rear section **1801** fits under, for example, the gutter **401** of photovoltaic module **107**. A centre section **1802** is dimensioned to fit over, for example, the rear flange of **1703** of photovoltaic module **108**. Both of the rear and centre sections **1801** and **1802** include upturned edges **1803** and **1804** to retain water. A forward section **1805** is also provided which is dimensioned such that it fits over the ridge and extends out from under, for example the front flange **1101** and over the rear edge part **1702**.

### Figure 19

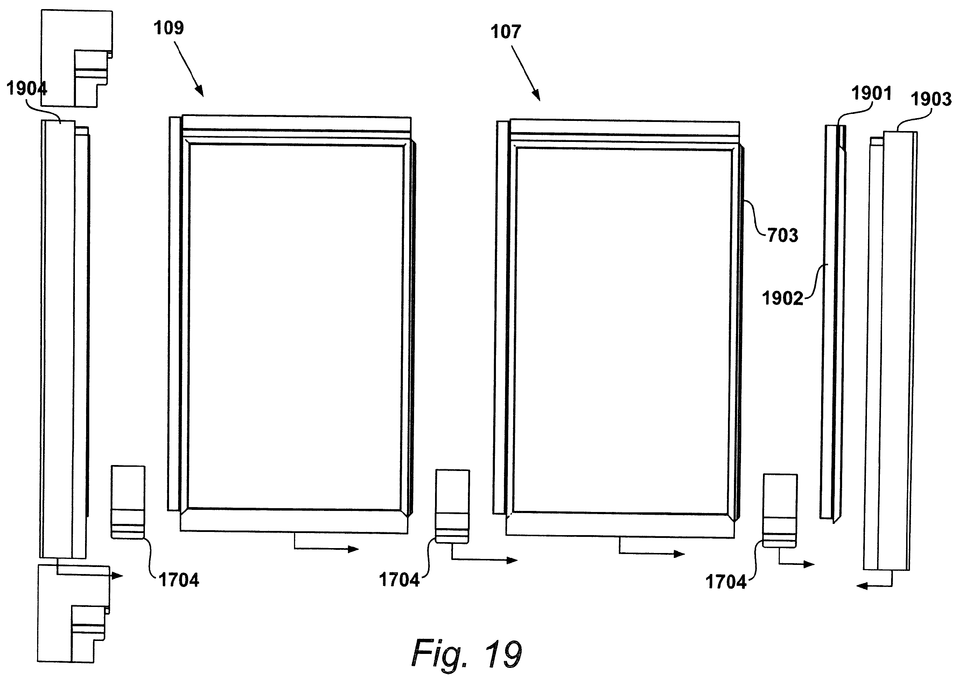

As described previously, the photovoltaic, module of the present invention is optimised for use in an array which is surrounded by a plurality of tiles. In order to fit the initial photovoltaic module to the roof, a rail element is provided. Figure 19 illustrates such a rail element **1901**, along with other components which enable the integration of the photovoltaic modules into a roof. In practice, a kit-of-parts will be provided comprising such components to allow fixing of one or more photovoltaic modules to a roof.

The rail element **1901** utilised is in fact identical to the left edge part **203**. It is therefore fixed to the battens of the roof subject to the installation of the photovoltaic array using self-tapping screws through its gutter **1902** as previously described. In the present implementation, a soak tray **1704** is fitted under the gutter **1902** during fixing of the rail element **1901**.

The first photovoltaic module **107** may then be interlocked with the rail element **1901**, with its right seal **703** abutting the rail element in the same way as previously described with reference to Figure 16.

Another soak tray **1704** is then inserted between the first photovoltaic module **107** and then next photovoltaic module **109**. A final soak tray is fitted under the gutter of the photovoltaic module **109**. The exposed edges are then finished by means of a right flashing element **1903**, which is arranged to cover the rail element **1901**, and a left flashing element **1904**, which is arranged to cover the gutter of the photovoltaic module **109**. It will be appreciated that any number of additional photovoltaic modules may be secured to the roof prior to the finishing of the array using the left flashing element **1904**.

### Figures 20A & 20B

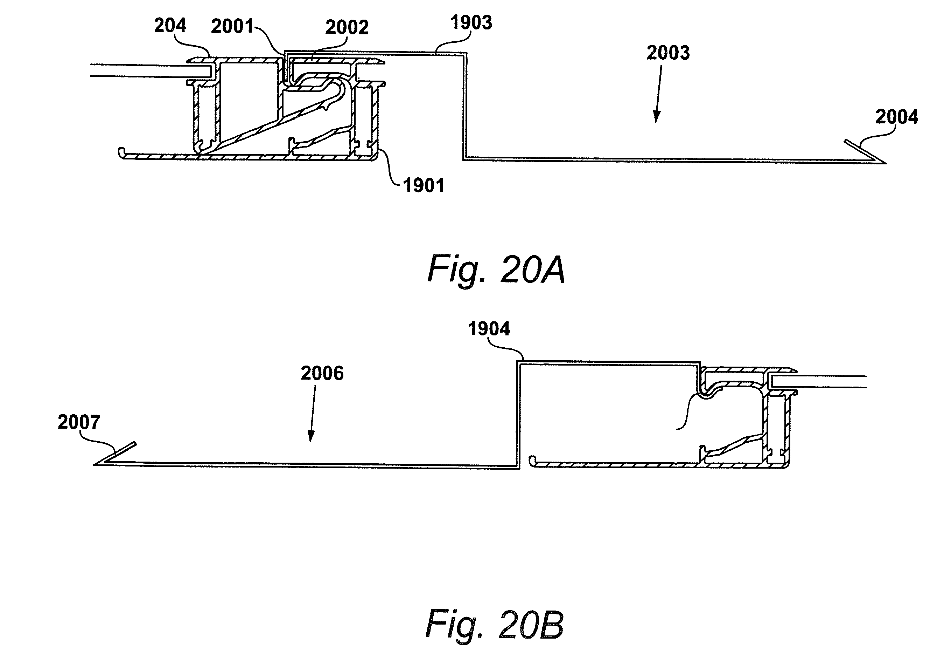

The right flashing element **1903** is shown in cross-sectional view in Figure 20A.

The right flashing element **1903** is stepped to cover the recess in rail element **1901**, which includes this as, if we recall, it is an identical component to the left edge part **203**. A downward protrusion **2001** in the flashing element **1904** fits between the left seal element **2002** of the rail element **1901**. The step in the right flashing element **1903** means that a section **2003** may extend under adjacent roofing elements. Waterproofing is achieved by provision of a flexible strip **2004** which is deformed under the tiles and prevents ingress of water.

The left flashing element **1904** is shown in cross-sectional view in Figure 20B.

The left flashing element **1904** is stepped to cover the gutter in the left edge part of the photovoltaic module **109**. A hook-shaped projection **2005** follows the shape of the left seal element of the photovoltaic module **109**, such that any water drips off the end of the hook-shaped projection **2005** and into the raised channel in the gutter. The left flashing element **1904**, as with the right flashing element **1903**, includes a section **2006** for extending under adjacent roofing elements which includes a similar flexible strip **2007** to prevent ingress of water.

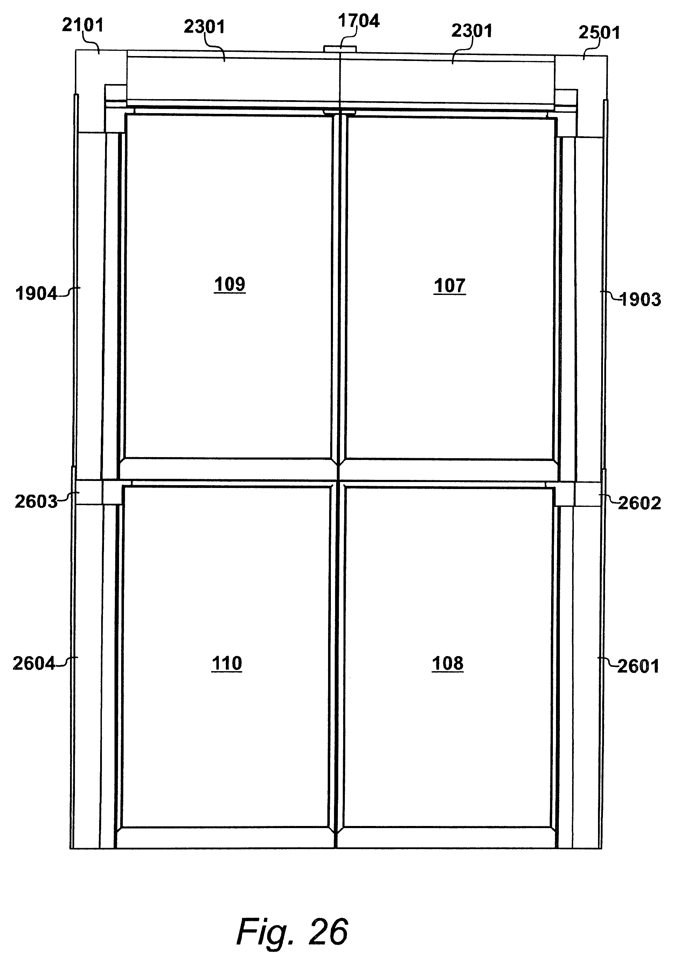

In the present embodiment, the steps in right flashing element **1903** and the left flashing element **1904** are so dimensioned that the parts which lay over the frames of the photovoltaic modules are narrower at an end intended to be closer to the ridge of the roof than at the other, which is intended to be closer to the eaves of the roof. The reason for this configuration will be described further with reference to Figures 26, 27 and 28.

### Figure 21

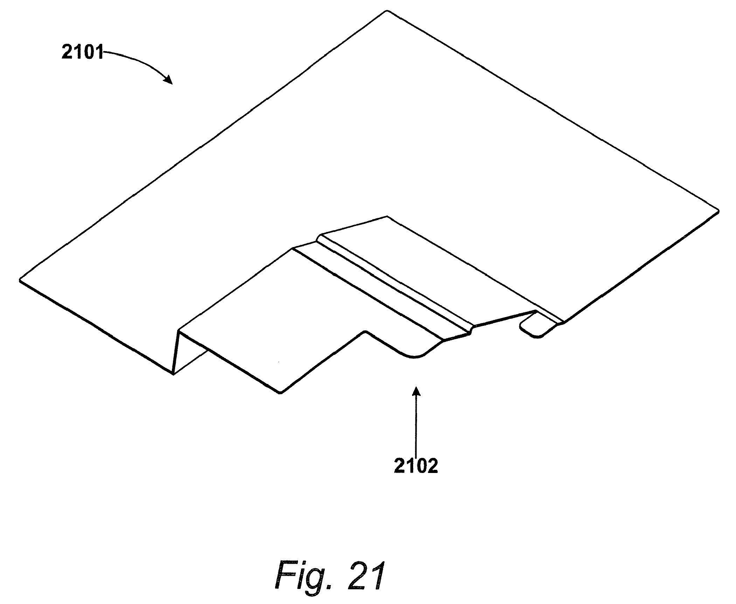

Following fixing of a row of photovoltaic modules to the roof using the components previously identified with reference to Figure 19, it is then necessary to make the left and right flashing elements weathertight. Corner flashing elements are provided for this purpose, with a left corner flashing element **2101** shown in a 3-dimensional view in Figure 21.

Substantially one quarter **2102** of the left corner flashing element **2101** is raised, and is so shaped and profiled to cooperate with both the step in the left flashing element **1904** and the profile of the rear edge part **206** of the frame **201**. It therefore provides a cover for the left end of the rear edge part **206**, and the ridge end of the left flashing element **1904** and therefore weatherproofs this section of the frame.

A right corner flashing element may be constructed as a mirror image of the left corner flashing element **2101**.

### Figures 22A & 22B

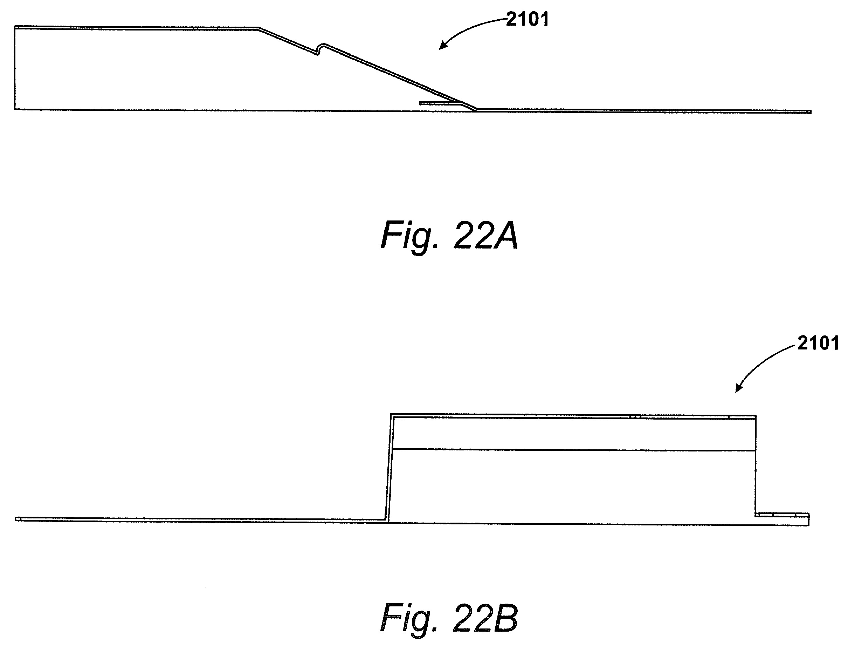

A side-on view of the left corner flashing element **2101** is shown in Figure 22A, in which the profile of the raised quarter **2102** thereof may be seen to substantially match that of the rear edge part **206** of the frame **202**.

A view from the front of the left corner flashing element **2101** is shown in Figure 22B, in which the profile of the raised quarter **2102** thereof may be seen to substantially match that of the left flashing element **1904**.

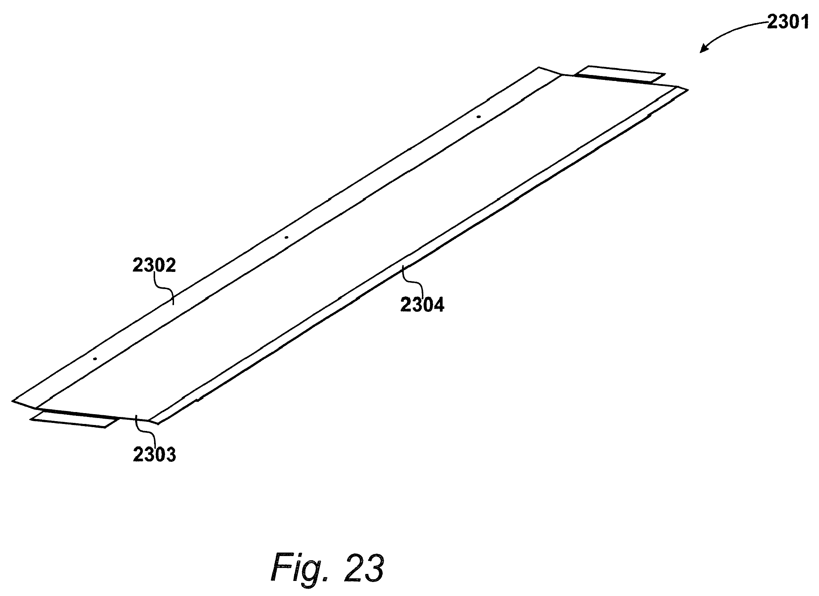

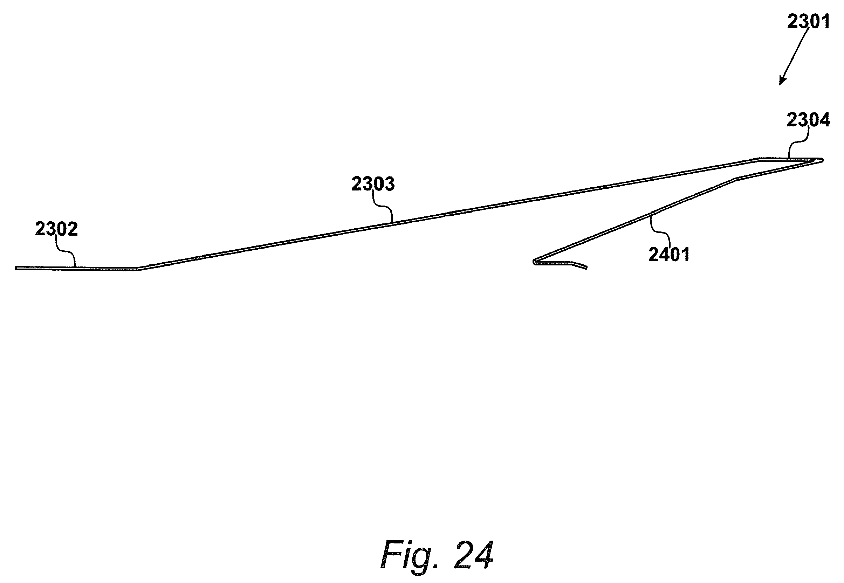

As will be described further with reference to Figures 23 and 24, when installed, the left corner flashing element **2101** fits over the step in the left flashing element **1904** and over the rear edge part **206** of the frame **202** such that water flows over the interface between them.

### Figure 23

In addition to left and right corner flashing elements, a rear flashing element **2301**, shown in Figure 23, is provided to provide weathertightness between the photovoltaic modules closest to the ridge in the array, and the roofing elements thereabove.

The rear flashing element **2301** is dimensioned to be as wide as one of the photovoltaic modules, such as photovoltaic module **112**, and includes a rearmost section **2302** which is designed to be fixed to a batten **105**, and, when the roof is completed, be covered by roofing elements.

A central section **2303**, which is angled relative to the rearmost section **2302**, and a frontmost section **2304** are also provided and are designed to cover the rear flange **1401** of a frame **201**.

### Figure 24

A side on view of the rear flashing element **2301** is shown in Figure 24. As may be seen in the figure, the rear flashing element **2301** also includes, connected to its frontmost section, a lower flange **2401** which has a profile designed to cooperate with the rear flange **1401** of a frame **201**. In this way, optimum fitting and weatherproofing may be achieved when the flashing element **2301** is installed.

### Figure 25

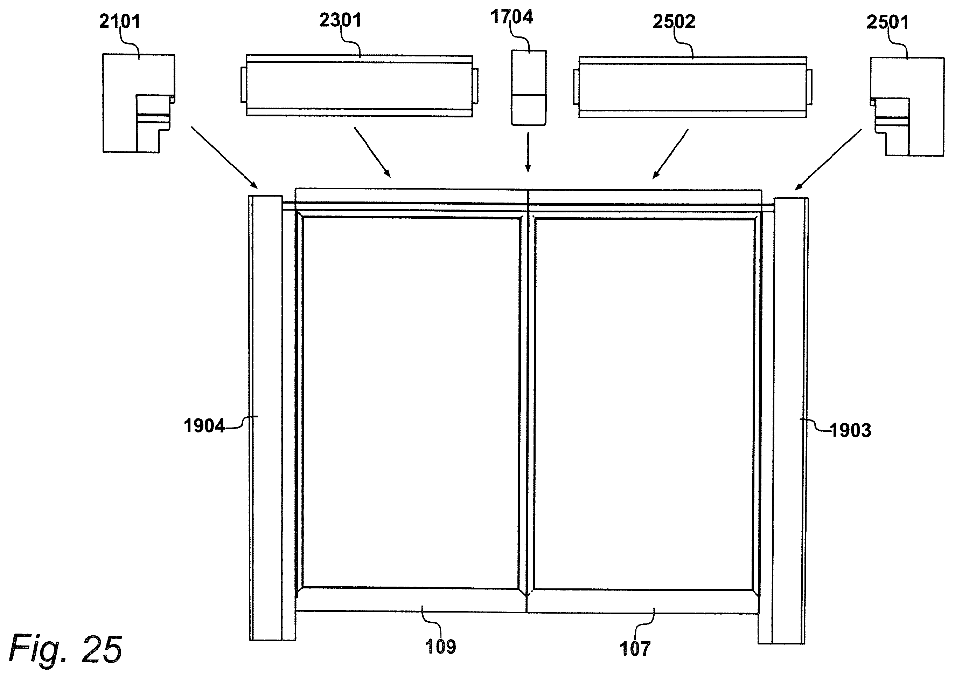

Components used to complete the interface between the photovoltaic modules **107** and **109** previously identified in Figure 19, and roofing elements above them are shown in Figure 25.

After completing the installation of the photovoltaic modules **107** and **109** and weather sealing with right flashing element **1903** and left flashing element **1904**, the left corner flashing element **2101**, a rear flashing elements **2301** and an identical rear flashing element **2502**, a further soak tray **1704** and a right corner flashing element **2501** are obtained. As described previously, the right corner flashing element **2501** is a mirror-image of the left corner flashing element **2101**.

Initially, the further soak tray **1704** is placed over the join between the rear flanges of each of the photovoltaic modules **107** and **109**. Then, the corner flashing elements are placed over the respective rear flanges. Finally, the two rear flashing elements **2301** are placed over respective rear flanges.

In this way, the top of the array is sealed against ingress of water.

### Figure 26

Photovoltaic modules **107** and **109** are shown in Figure 26 having been finished with the components identified in Figure 25. In addition, photovoltaic modules **108** and **110** are illustrated having been installed beneath the modules **107** and **109**.

Weathertightness at the right edge of the photovoltaic module **108** is provided by a further right edge flashing element **2601**, and at the left edge of the photovoltaic module **110** by a further right edge flashing element **2602**. In addition, it will be seen that a further right corner flashing element **2601** is located under the right flashing element **1903** and over right flashing element **2601**, whilst a further left corner flashing element **2603** is located under the left flashing element **1904** and over left flashing element **2604**.

This is made possible by the stepped parts of the left and right edge flashing elements being narrower at their ridge ends than at their eaves ends. In this way, the corner flashing elements fit over the stepped portion of the edge flashing elements at their ridge ends, but under then at their eaves ends. This assists in terms of maintaining watertightness, but also in terms of ease of manufacturing and installation because the same components (the corner flashing elements) can be used in several places in an array.

### Figure 27

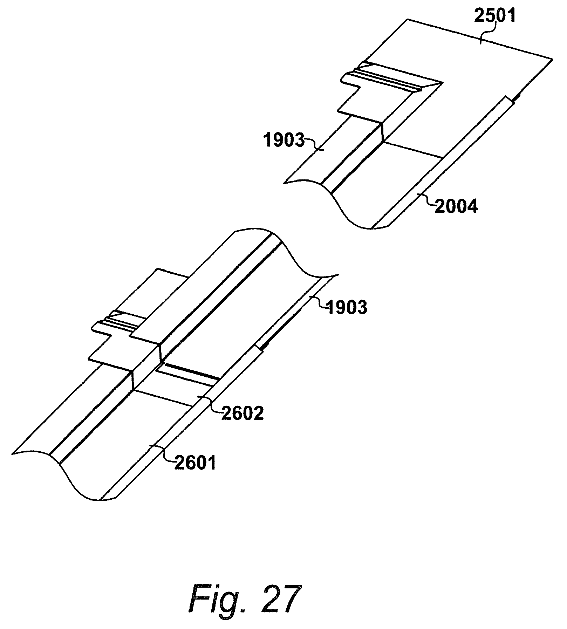

The arrangement of the right flashing elements and right corner flashing elements in the array shown in Figure 26, is shown in greater detail in Figure 27. As can be seen in the Figure, the right corner flashing element **2501** covers the rear flange of the photovoltaic module **107** and is installed to cover the ridge end of the right flashing element **1903.** In the present design, the right corner flashing element **2501** is dimensioned so that the flexible strip **2004** remains over it to provide weather sealing with adjacent roofing elements.

Further down, the right corner flashing element **2602** is installed in a similar way with respect to photovoltaic module **108** and right flashing element **2601** as the right corner flashing element **1903**. However, due to the location of the step being different between the ridge and eaves ends of the right flashing elements **1903** and **2601**, the right flashing element **1903** covers the end of the right corner flashing element **2602** nearest the ridge.

### Figure 28

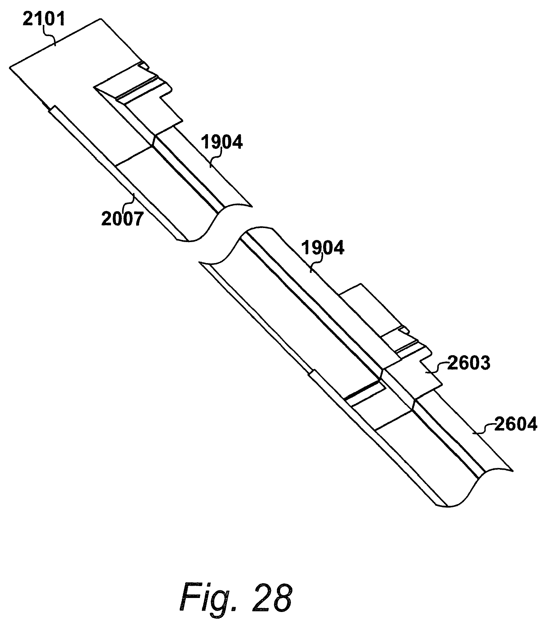

A similar configuration is illustrated in Figure 28, with the left corner flashing element **2101** covering the ridge end of the left flashing element **1904** and being so dimensioned that the flexible strip **2007** remains proud. The left flashing element **1904** then covers the left corner flashing element **2603**, which in turn covers the left flashing element **2604**.

In sum, it will be appreciated by those skilled in the art therefore that in accordance with the present invention, a core kit of parts may be provided for attaching a photovoltaic module having the frame of the present invention to a roof. Such a kit would comprise the rail element **1903**, the right flashing element **1903** and the left flashing element **1905**. This will allow one photovoltaic module of the present invention to be secured to a roof. Optionally the soak trays may be included or alternative measures could be taken to weatherproof the upper and lower interfaces with roof tiles. Optionally the kit could further comprise the left corner flashing element **2101** and optionally the right corner flashing element **2501**. Further, the rear flashing element **2301** could be included. Kits could then be constructed for securing any dimension of array, comprising the requisite number of left and right flashing elements, left and right corner flashing elements, soak trays and rear flashing elements.

## Claims

1. A frame (201) for enclosing a photovoltaic laminate (202), the frame having a first side edge part (203), a second side edge part (204), a front edge part (205) and a rear edge part (206), each of which has an recess (501, ) in an inner face for retaining said photovoltaic laminate, and in which:
the first side edge part has an outwardly-protruding gutter (401) arranged to extend under the second side edge part of a matching frame (108-112), and has an outwardly protruding seal element (503);
the second side edge part has an outwardly-protruding seal element (702) arranged to interlock with the first side edge part of a matching frame under its seal element and over its gutter;
the front edge part has a forwardly-protruding flange (1101) to extend over a portion of the rear edge of a matching frame;
the rear edge part has a downward-angled, rearwardly-protruding flange (1014) to extend under the forwardly-protruding flange of the front edge part of a matching frame; **characterised in that**:
each of the edge parts have substantially bevelled end sections to form mitre joints between them, such that the first side and second side edge parts each have front and rear bevels (402, 403, 701, 702), and the front and rear edge parts each have left and right bevels (1001, 1002, 1301, 1302); and
the gutter of the first side edge part extends rearward of its rear bevel, so as to extend under the rear edge part.

2. The frame of claim 1, in which the mitre joints are strengthened by means of L-shaped inserts (301, 302, 303, 304) received in matching apertures (502, 803, 1103, 1405) in the bevelled end sections of each edge part.

3. The frame of claim 1, in which the rearwardly-protruding flange of the rear edge part extends to meet the gutter.

4. The frame of claim 3, in which the gutter ends before the front bevel of the first side edge part, such that it meets the rearwardly-protruding flange of the rear edge part of a matching frame.

5. The frame of any preceding claim, in which the gutter has one or more elongate upstanding ribs (601-604) in the direction from the front to the rear of the frame to prevent leakage of water.

6. The frame of any preceding claim, in which the rearwardly-protruding flange includes a ridge (1403) to prevent backwash of water.

7. The frame of any preceding claim, in which the recess on the inner face of each edge part is a C-section recess.

8. The frame of any preceding claim, in which the edge parts are extruded aluminium.

9. A photovoltaic module (107), **characterised in that** it comprises a photovoltaic laminate (202) enclosed by the frame (201) of any one of claims 1 to 8.

10. A roof (102) of a building, **characterised in that** it comprises one or more photovoltaic module as set out in claim 9.

11. The roof of claim 10, further comprising a plurality of roofing elements (103) that surround said one or more photovoltaic modules.

12. The roof of claim 11, in which the first side edge part (203) is a left edge part of the frame, and the second side edge part is a right edge part of the frame, and said roof further comprises:
a left flashing element (1904) to interface a left-most one of the photovoltaic modules with adjacent ones of the plurality of roofing elements, the left flashing element being stepped to extend under said adjacent ones of the plurality of roofing elements and to extend over the gutter of the left-most one of the photovoltaic modules.

13. The roof of claim 11, in which the first side edge part (203) is a left edge part of the frame, and the second side edge part is a right edge part of the frame, and said roof further comprises:
a right rail element (1901) that is identical to a left edge part of the frame of claim 1 to seal a right-most one of the one or more photovoltaic modules; and
a right flashing element (1903) that is stepped to extend under said adjacent ones of the one or more roofing elements and to extend over the recess in the inner face of the right rail element.

14. The roof of claim 10, having two photovoltaic modules adjacent in the direction from the ridge to the eaves of said roof such that one photovoltaic module is a ridge-end photovoltaic module (107) and the other is an eaves-end photovoltaic module (108), and in which the rearwardly-protruding flange of the rear edge part of the eaves-end photovoltaic module extends between its gutter (401) and the gutter of the ridge-end photovoltaic module, such that water flowing downward in the gutter of the eaves-end photovoltaic module flows over the rear edge part of the eaves-end photovoltaic module.

15. The roof of claim 15, further comprising a soak tray (1704) fixed under the gutter (401) of the ridge end photovoltaic module and over the rearwardly-protruding flange (1703) of the eaves-end photovoltaic module.
